# EUROPÄISCHE PATENTSCHRIFT

(11) **EP 1 497 999 B1**
(45) Veröffentlichungstag und Bekanntmachung des Hinweises auf die Patenterteilung: **19.10.2005**
(21) Anmeldenummer: 02727239.2
(22) Anmeldetag: 18.03.2002
(51) Int. Cl.: H04Q 7/30, H03M 7/50

(54) **VERFAHREN UND VORRICHTUNG ZUR UMWANDLUNG VON CODIERTEN SPRACHDATEN**
METHOD AND DEVICE FOR CONVERTING CODED VOICE DATA
PROCEDE ET DISPOSITIF POUR CONVERTIR DES DONNEES VOCALES CODEES

(43) Veröffentlichungstag der Anmeldung: 19.01.2005
(73) Patentinhaber: SIEMENS AKTIENGESELLSCHAFT, 80333 München (DE)
(72) Erfinder: BACHMANN, Frank, 10179 Berlin (DE); SCHMUTZLER, Werner, 82256 Fuerstenfeldbruck (DE); VALENZUELA, Alejandro, 53604 Bad Honnef (DE)
(86) Internationale Anmeldenummer: PCT/DE2002/000975
(87) Internationale Veröffentlichungsnummer: WO 2003/079710

(56) Entgegenhaltungen:
- EP-A- 1 076 466
- US-A- 5 675 508
- US-A- 6 070 089

## Beschreibung

Die Erfindung betrifft ein Verfahren und eine Vorrichtung zur Umwandlung von in einem ersten Sprachcodec-Modus übertragene Sprachdaten in in einem zweiten Sprachcodec-Modus übertragene Sprachdaten innerhalb einer Vermittlungsstelle eines auf UMTS-Standard oder GERAN-Standard basierenden Kommunikationsnetzes gemäß den Oberbegriffen der Patentansprüche 1 und 7.

Das Universal Mobile Telecommunication System (UMTS) stellt ebenso wie das GSM EDGE Radio Access Network (GERAN) eines von mehreren Mobilfunksystemen dar, die dem Teilnehmer eines mobilen Endgerätes eine Vielzahl an Diensten zur Verfügung stellen. UMTS arbeitet in den Bereichen von 1885-2025 MHz und 2110-2200 MHz und ermöglicht über die bisher bekannte Funktionalität der schmalbandigen Mobilfunksysteme hinaus auch Datenraten von 2 Mbit/s.

Eines der Ziele des Mobilfunksystems UMTS ist es, dem Teilnehmer ein Endgerät für verschiedene Netze, wie beispielsweise GSM (Global System for Mobile Communications), DECT (Digitally European Cordless Telecommunications) oder ERMS (European Radio Messaging System) zur Verfügung zu stellen und erstmals Roaming und Handover zwischen technisch verschiedenen Netzen mit Hilfe von Dual-Band- und Dual-Mode-Terminals zu ermöglichen.

Auf UMTS-Standard basierende Kommunikationsnetze erfordern aufgrund der Integration mehrerer Mobilfunksysteme in einem gemeinsamen PCN(Personal Communication Networks)-Mobilfunknetz der dritten Generation UMTS-Mobile Switching Centers, die als Vermittlungsstelle dazu geeignet sind, bestehende Sprachverbindungen von einem AMR(Adaptive-Multi-Rate)-Codec-Modus auf einen anderen AMR-Codec-Modus zu transcodieren.

Eine derartige Transcodierung wird herkömmlicherweise durch die Umwandlung von in einem ersten Sprachcodec-Modus übertragene Sprachdaten in in einem zweiten Sprachcodec-Modus übertragene Sprachdaten unter Zwischenschaltung eines TDM (Time-Division-Multiplexing)-Koppelfeldes und einer Komprimierung bzw. Dekomprimierung durchgeführt. Im einzelnen werden hierfür Sprachdaten, die innerhalb eines von einem Funknetzwerk UTRAN in einem Abstand von 20 ms gesendeten Sprachrahmens (Speech Frame) an die Vermittlungsstelle übertragen werden, mittels einer Decodierungseinrichtung decodiert, wobei die Sprachdaten zuvor in einem ersten AMR (Adaptive-Multi-Rate)-Codec-Modus codiert waren. Die in dem Sprachrahmen enthaltenen Sprachdaten werden nach ihrer Decodierung in linear pulscodemodulierte (PCM) Worte mit einer Länge von beispielsweise 13 bit umgewandelt. Diese werden anschließend nach dem A/µ-Law zu Worten mit einem Informationsgehalt von 8 bit komprimiert und über das Time-Division-Multiplexing-Koppelfeld zeitmultiplext. Die zeitmultiplexten Daten werden zu linear pulscodemodulierten Worten mit einem Informationsgehalt von beispielsweise 13 bit dekomprimiert und anschließend mit einem neuen AMR-Codec-Modus codiert. Siehe z.B. US 6 070 089.

Die Verwendung des synchron funktionierenden TDM-Koppelnetzes hat zur Folge, dass die Übertragung von und zu dem Funknetzwerk UTRAN mit einer Verzögerung von 20 ms stattfindet. Desweiteren findet bei der A/µ-Law-Komprimierung ein Qualitätsverlust der zu komprimierenden linear pulscode-modulierten Worte statt.

Demzufolge liegt der vorliegenden Erfindung die Aufgabe zugrunde, ein Verfahren und eine Vorrichtung zur Umwandlung von codierten Sprachdaten in einem auf UMTS-Standard oder GERAN-Standard basierenden Kommunikationsnetz derart weiterzuentwicklen, dass eine nahezu verzögerungsfreie Umwandlung der Sprachdaten und eine verbesserte Sprachqualität innerhalb des Kommunikationsnetzes vorhanden ist.

Diese Aufgabe wird verfahrensseitig durch die Merkmale des Patentanspruches 1 und vorrichtungsseitig durch die Merkmale des Patentanspruches 7 gelöst.

Ein wesentlicher Punkt der Erfindung liegt darin, dass die decodierten Sprachdaten als linear pulscodemodulierte Sprachdaten von dem Ausgang einer Decodierungseinrichtung unter Umgehung eines Time-Division-Multiplexing-Koppelfeldes und von Komprimierungs- und Dekomprimierungseinrichtungen zum Komprimieren bzw. Dekomprimieren der linear pulscodemodulierten Sprachdaten zu dem Eingang einer Codiereinrichtung (6b,6a) zugeleitet werden, um sie mittels der Codiereinrichtung (6b,6a) in in dem zweiten Sprachcodec-Modus zu übertragenden Sprachdaten codiert zu werden. Vorzugsweise werden die linear pulscodemodulierten Sprachdaten von dem Ausgang der Decodierungseinrichtung direkt zu dem Eingang der Codierungseinrichtung umgeleitet.

Das Umgehen des TDM-Koppelfeldes hat zur Folge, dass eine nahezu verzögerungsfreie Transcodierung der Sprachdaten von einem ersten Sprachcodec-Modus in einen zweiten Sprachcodec-Modus möglich ist. Das Umgehen der Komprimierungs- bzw. Dekomprimierungseinrichtungen hat zur Folge, dass eine Verminderung der Qualität während der Komprimierungs- und Dekomprimierungsphasen erst gar nicht stattfindet.

Demzufolge wird zum einen die Schleife oder der TDM-Switch näher an die Decodierungs- bzw. Codierungseinrichtung gebracht und zum anderen ein asynchroner Switch bzw. eine verzögerungsfreie Schleite verwendet.

Als mögliche Sprachcodec-Modi für die von einem Funknetzwerk UTRAN empfangenen bzw. an das UTRAN gesendeten Sprachdaten im Rahmen einer Sprachverbindung kommen Modi von Sprachcodecs wie Adaptive-Multi-Rate-Codecs, Codecs für die Komprimierung von Sprachdaten, Codecs für adaptive differentielle Puls-Code-Modulation und Codecs zur Verbesserung der Übertragungsrate und Übertragungsqualität in Frage. Hierbei können sich die in Bezug auf die Vermittlungsstelle eingehenden und ausgehenden Sprachdaten innerhalb eines Sprachrahmens in einem Codec-Modus oder mehreren Codec-Modi voneinander unterscheiden.

Eine Umleiteinrichtung, die mit den Codierungs- und Decodierungseinrichtungen unmittelbar verbunden ist, kann vorteilhaft als Software in einem digitalen Signalprozessor (DSP), einem Field Programmable Gate Array (FPGA), einer Application Specific Integrated Circuit (ASIC) oder einem Netzwerkprozessor realisiert sein, wobei diese Einrichtungen weitere Einrichtungen zur Umwandlung der Sprachdaten enthalten können. Diese Einrichtungen können beispielsweise zusätzlich eine innerhalb der Umleiteinrichtung oder mit der Umleiteinrichtung verbundene Schalteinrichtung zum Aktivieren bzw. Deaktivieren der Umleiteinrichtung enthalten. Auf diese Weise ist es möglich, dass durch Deaktivierung der Umleiteinrichtung eine Umwandlung der Sprachdaten in der herkömmlichen Weise durchgeführt wird, nämlich mittels der Komprimierung und Dekomprimierung der linear pulscodemodulierten Sprachdaten und des Hinzuschaltens des TDM-Koppelfeldes.

Eine Vorrichtung zur Umwandlung von codierten Sprachdaten, insbesondere von in einem AMR-Codec-Modus codierten Sprachdaten, weist vorteilhaft neben der Umleiteinrichtung Decodierungs- und Codierungseinrichtungen auf, die dazu geeignet sind, die Sprachdaten aus den verschiedenen Codec-Modi zu decodieren bzw. in diese Codec-Modi zu codieren. Aus einem Zusammenspiel derartiger Decodierungs- und Codierungseinrichtungen mit der erfindungsgemäßen Umleiteinrichtung ergibt sich vorteilhaft die schnelle Umwandlung eingehender Sprachdaten, die in einem beliebigen Sprachcodec-Modus codiert sind in in einem anderen Sprachcodec-Modus codierte Sprachdaten unter Beibehalt hoher Sprachdatenqualität.

Weitere vorteilhafte Ausführungsformen ergeben sich aus den Unteransprüchen.

Weitere Vorteile und Zweckmäßigkeiten ergeben sich aus der nachfolgenden Beschreibung in Verbindung mit der Zeichnung. Hierbei zeigen:
- Fig. 1: eine schematische Darstellung eines herkömmlichen Verfahrens zur Umwandlung von Sprachdaten mit Vorrichtungsaspekten und
- Fig. 2: eine schematische Darstellung des erfindungsgemäßen Verfahrens zur Umwandlung von Sprachdaten gemäß einem Ausführungsbeispiel mit Vorrichtungsaspekten.

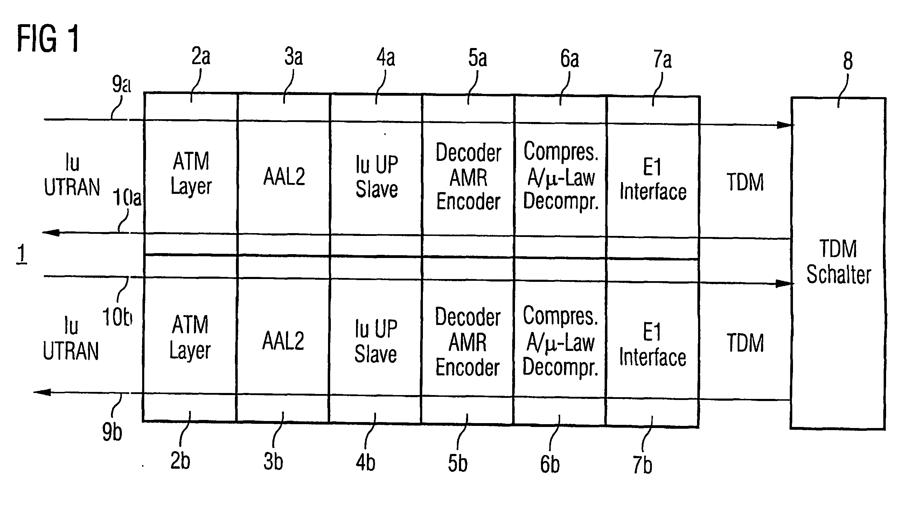

Das in Fig. 1 gezeigte herkömmliche Verfahren zur Umwandlung von Sprachdaten mit Vorrichtungsaspekten stellt ein Verfahren dar, wie es innerhalb einer Vermittlungsstelle, die in einem auf UMTS-Standard basierenden Kommunikationsnetz angeordnet sein kann, stattfinden kann.

Sprachdaten werden von einem Funknetzwerk UTRAN 1 an eine A-synchronous-Transfer-Mode-Schicht (ATM-Layer) 2a,2b gesendet und mittels einer ATM Adaption Layer 2 (AAL 2) 3a,3b in ATM-Zellen mit variablen Bitraten bei verbindungsorientierter Echtzeit-Übertragung segmentiert.

Anschließend wird mittels den Iu UP Slaves 4a und 4b, die einen Referenzpunkt zwischen dem UTRAN und einem CN (Corporate Network) in der User Plane darstellen, ein Abgleich der RFCIs durchgeführt. Mittels einer Codierungs- und Decodierungseinrichtung 5a und 5b (Adaptive-Multi-Rate-Codec) werden die eingehenden, in einem AMR-Codec-Modus codierten Sprachdaten decodiert und in linear pulscodemodulierte Worte mit einem Informationsgehalt von 13 bit umgewandelt.

Diese pulscodemodulierten Worte werden anschließend nach dem A/µ-Law mit Komprimierungs- und Dekomprimierungseinrichtungen 6a und 6b zu Worten mit 8 bit Informationsgehalt komprimiert und über ein Time-Division-Multiplexing (TDM)-Koppelfeld 8 über E1-Interfaces 7a und 7b zurückgeschleift, um nachfolgend mittels der Dekomprimierungs- und Komprimierungseinrichtungen 6a und 6b dekomprimiert zu werden und mit einem neuen AMR-Codec-Modus mittels der Codierungeinrichtung 5a und 5b codiert zu werden. Die Bezugszeichen 9a, 9b, 10a und 10b geben die Richtungen der ein- und ausgehenden codierten Sprachdaten wieder.

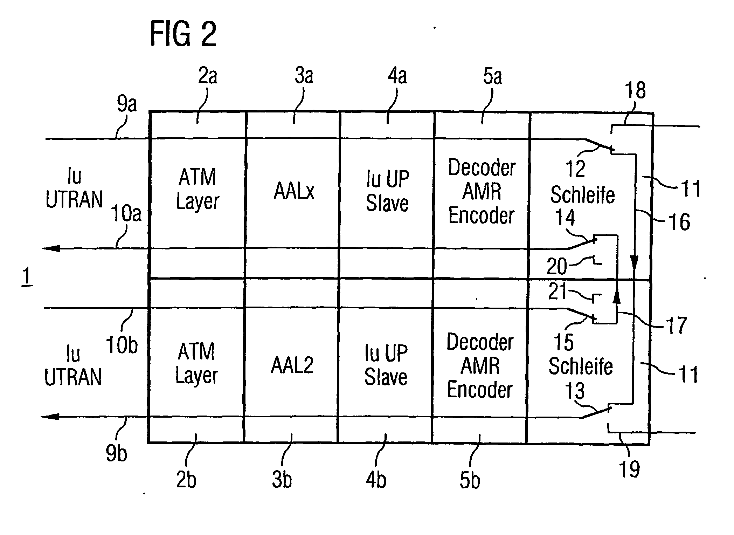

Fig. 2 zeigt in einer schematischen Darstellung ein Ausführungsbeispiel des erfindungsgemäßen Verfahrens mit Vorrichtungsaspekten. Mit Fig. 1 übereinstimmende Teile bzw. gleiche Verfahrensschritte sind mit den gleichen Bezugszeichen versehen.

Der in der Beschreibung zu Fig. 1 beschriebene Verfahrensablauf bis zur Decodierung der codierten Sprachdaten mittels der Decodierungs- und Codierungseinrichtung 5a, 5b gilt ebenso für das Ausführungsbeispiel des erfindungsgemäßen Verfahrens gemäß der Fig. 2. Im Unterschied zum herkömmlichen Verfahren, wie es in Fig. 1 beschrieben wird, ist bei dem Ausführungsbeispiel eine Umleiteinrichtung 11 unmittelbar hinter den Codierungs- und Decodierungseinrichtungen 5a und 5b angeordnet, die mittels der schleifenartigen Verbindungen 16 und 17 eine direkte Umleitung der aus Ausgängen der Codierungs-und Decodierungseinrichtungen 5a und 5b kommenden decodierten Sprachdaten auf die Eingänge der jeweils anderen Codierungs-und Decodierungseinrichtungen 5a und 5b ermöglichen.

Mittels einer Schalteinrichtung, die die Schalter 12-15 umfaßt, ist eine Aktivierung der Umleiteinrichtung möglich, wie sie als Momentansituation in der Abbildung gemäß Fig.2 gezeigt wird. Alternativ kann eine Deaktivierung der Umleiteinrichtung dadurch bewirkt werden, dass die Schalter 12-15 auf die Anschlüsse 18-21 umgeschaltet werden, die wiederum mit Komprimierungs- und Dekomprimierungseinrichtungen sowie TDM-Koppelfeldern, die beispielsweise in der Abbildung gemäß Fig. 1 gezeigt werden, verbunden sein können.

Auf diese Weise ist ein schnelles Umschalten einer Vorrichtung, die zur Durchführung des erfindungsgemäßen Verfahrens geeignet ist, in einen Zustand, in dem sie die Durchführung eines herkömmlichen Verfahrens ermöglicht, möglich.

Sämtliche in den Anmeldungsunterlagen offenbarte Merkmale werden als erfindungswesentlich beansprucht, soweit sie einzeln oder in Kombination gegenüber dem Stand der Technik neu sind.

### Bezugszeichenliste

- 1: Funknetzwerk UTRAN
- 2a,2b: ATM-Layer
- 3a,3b: AAL 2 (ATM Adaption Layer 2)
- 4a,4b: Iu UP Slave
- 5a,5b: AMR-Decodierungs- und Codierungseinrichtung
- 6a,6b: Komprimierungs- und Dekomprimierungseinrichtung
- 7a,7b: E1-Interface
- 8: TDM-Switch
- 9a,9b: zu- und abgehende Sprachdatenverbindungen
- 10a,10b: zu- und abgehende Sprachdatenverbindungen
- 11: Umleitungseinrichtung
- 12-15: Schalter
- 16,17: Umleitungsverbindungen
- 18-21: Anschlüsse der Schalteinrichtung

## Patentansprüche

1. Verfahren zur Umwandlung von in einem ersten Sprachcodec-Modus übertragene Sprachdaten in in einem zweiten Sprachcodec-Modus übertragene Sprachdaten innerhalb einer Vermittlungsstelle eines auf UMTS-Standard oder GERAN-Standard basierenden Kommunikationsnetzes, wobei die in dem ersten Sprachcodec-Modus übertragenen Sprachdaten mittels einer Decodiereinrichtung (6a,6b) decodiert und in linear pulscodemodulierte Sprachdaten umgewandelt werden,
**dadurch gekennzeichnet, dass**
die linear pulscodemodulierten Sprachdaten unter Umgehung eines Time-Division-Multiplexing-Koppelfeldes und von Komprimierungs- und Dekomprimierungseinrichtungen zum Komprimieren bzw. Dekomprimieren der linear pulscodemodulierten Sprachdaten einem Eingang einer Codiereinrichtung (6b,6a) zugeleitet werden, um mittels der Codiereinrichtung (6b,6a) in in dem zweiten Sprachcodec-Modus zu übertragende Sprachdaten codiert zu werden.

2. Verfahren nach Anspruch 1,
**dadurch gekennzeichnet, dass**
die linear pulscodemodulierten Sprachdaten mittels einer Umleiteinrichtung (11) von einem Ausgang der Decodiereinrichtung (6a,6b) direkt zu dem Eingang der Codiereinrichtung (6b,6a) geleitet werden.

3. Verfahren nach Anspruch 1 oder 2,
**dadurch gekennzeichnet, dass**
die den Sprachcodec-Modi zugrunde liegenden Sprachcodecs Adaptive-Multi-Rate-Codecs, Codecs für die Komprimierung von Sprachdaten, Codecs für adaptive differentielle Puls-Code-Modulation und Codecs zur Verbesserung der Übertragungsrate und Übertragungsqualität umfassen.

4. Verfahren nach einem der vorangegangenen Ansprüche,
**dadurch gekennzeichnet, dass**
die Umleiteinrichtung (11) mittels Software in einem digitalen Signalprozessor, einem Field Programmable Gate Array (FPGA), einer Application Specific Integrated Circuit (ASIC) oder einem Netzwerkprozessor realisiert wird.

5. Verfahren nach einem der vorangegangenen Ansprüche,
**dadurch gekennzeichnet, dass**
die linear pulscodemodulierten Sprachdaten Wörter mit einem Informationsumfang von 13 bit umfassen.

6. Verfahren nach einem der vorangegangenen Ansprüche,
**dadurch gekennzeichnet, dass**
die in dem Sprachcodec-Modus übertragenen Sprachdaten innerhalb eines Sprachrahmens von oder zu einem Funknetzwerk UTRAN übertragen werden.

7. Vorrichtung zur Umwandlung von in einem ersten Sprachcodec-Modus übertragene Sprachdaten in in einem zweiten Sprachcodec-Modus übertragene Sprachdaten innerhalb einer Vermittlungsstelle eines auf UMTS-Standard oder GERAN-Standard basierenden Kommunikationsnetzes nach einem Verfahren gemäß der vorangegangenen Ansprüche,
**gekennzeichnet durch**
eine Umleiteinrichtung (11) zur direkten Umleitung linear pulscodemodulierter Sprachdaten, die aus einer Decodierung der in den ersten Sprachcodec-Modus übertragenen Sprachdaten hervorgegangen sind, von dem Ausgang einer Decodiereinrichtung (6a,6b) an den Eingang einer Codiereinrichtung (6b,6a) zum Codieren der linear pulscodemodulierten Sprachdaten in in dem zweiten Sprachcodec-Modus zu übertragene Sprachdaten.

8. Vorrichtung nach Anspruch 7,
**gekennzeichnet durch**
eine in der Umleiteinrichtung (11) angeordnete Schalteinrichtung (12-15,18-21) zur Aktivierung und/oder Deaktivierung der Umleiteinrichtung (11).

9. Vorrichtung nach Anspruch 7 oder 8,
**dadurch gekennzeichnet, dass**
die Umleiteinrichtung (11) in einem digitalen Signalprozessor, einem Field Programmable Gate Array (FPGA), einer Application Specific Integrated Circuit (ASIC) oder einem Netzwerkprozessor angeordnet ist.

10. Vorrichtung nach einem der Ansprüche 7-9,
**dadurch gekennzeichnet, dass**
die Decodier- und Codiereinrichtungen (6a,6b) derart ausgebildet sind, dass sie Sprachdaten aus oder in einen Sprachcodec-Modus basierend auf einem Adaptive-Multi-Rate-Codec, einem Codec für die Komprimierung von Sprachdaten, einem Codec für die adaptive differentielle Puls-Code-Modulation und/oder einem Codec zur Verbesserung der Übertragungsrate und Übertragungsqualität decodieren bzw. codieren.

## Claims

1. Method for converting voice data transmitted in a first voice codec mode into voice data transmitted in a second voice codec mode within an exchange of a communications network based on the UMTS Standard or GERAN Standard, with the voice data transmitted in the first voice codec mode being decoded by means of a decoding device (6a,6b) and converted into linear pulse-code-modulated voice data,
**characterized in that**
the linear pulse code-modulated voice data is directed to an input of an encoding device (6b, 6a) bypassing a Time-Division-Multiplexing switching matrix and compression and decompression devices to compress or decompress the linear pulse code modulated voice data, in order to be encoded by means of the encoding device (6b,6a) into voice data to be transmitted in the second voice codec mode.

2. Method in accordance with claim 1,
**characterized in that**
the linear pulse code-modulated voice data is directed by means of a redirection device (11) from an output of the decoding device (6a,6b) directly to the input of the encoding device (6b,6a).

3. Method in accordance with claim 1 or 2,
**characterized in that**
the voice codecs supporting the voice codec modes include Adaptive-Multi-Rate codecs, codecs for the compression of voice data, codecs for adaptive differential pulse code modulation and codecs for improving the transmission rate and transmission quality.

4. Method in accordance with one of the previous claims,
**characterized in that**
the redirection device (11) is implemented by means of software in a Digital Signal Processor, a Field Programmable Gate Array (FPGA), an Application Specific Integrated Circuit (ASIC) or a network processor.

5. Method in accordance with one of the previous claims,
**characterized in that**
the linear pulse code modulated voice data comprises words with an information scope of 13 bits.

6. Method in accordance with one of the previous claims,
**characterized in that**
the voice data transmitted in the voice codec mode is transmitted within a speech frame from or to a UTRAN radio network.

7. Device for converting voice data transmitted in a first voice codec mode into voice data transmitted in a second voice codec mode within an exchange of a communications network based on the UMTS Standard or the GERAN Standard according to a method in accordance with the previous claims.
**characterized in that**
a redirection device (11) for direct redirection of linear pulse code modulated voice data obtained from decoding the voice data transmitted in the first voice codec mode from the output of a decoding device (6a,6b) to the input of an encoding device (6b,6a) to encode the linear pulse code modulated voice data into voice data to be transmitted in the second voice codec mode.

8. Device in accordance with claim 7,
**characterized by**
a switching device (12-15,18-21) arranged in the redirection device (11) for activating and/or deactivating the redirection device (11).

9. Device in accordance with claim 7 or 8,
**characterized in that**
the redirection device (11) is located in a digital signal processor, a Field Programmable Gate Array (FPGA), an Application Specific Integrated Circuit (ASIC) or a network processor.

10. Device in accordance with one of the claims 7-9,
**characterized in that**
The decoding and encoding device (6a,6b) is embodied such that it encodes or decodes voice data from or into a voice codec mode based on an Adaptive Multi-Rate codec, a codec for the compression of voice data, a codec for adaptive differential pulse code modulation and/or a codec for improving the transmission rate and transmission quality.

## Revendications

1. Procédé pour la conversion de données vocales transmises dans un premier mode codeur-décodeur de parole en données vocales transmises dans un second mode codeur-décodeur de parole à l'intérieur d'un centre de commutation d'un réseau de communication basé sur le standard UMTS ou le standard GERAN, les données vocales transmises dans le premier mode codeur-décodeur de parole étant décodées au moyen d'un dispositif de décodage (6a, 6b) et étant converties en données vocales modulées de façon linéaire par impulsions et codage,
**caractérisé en ce que**
les données vocales modulées de façon linéaire par impulsions et codage sont acheminées à une entrée du dispositif de codage (6b, 6a) en contournant un champ de couplage de Time-Division-Multiplexing et des dispositifs de compression et de décompression pour la compression resp. la décompression des données vocales modulées de façon linéaire par impulsions et codage, afin d'être codées au moyen du dispositif de codage (6b, 6a) en données vocales à transmettre dans le second mode codeur-décodeur de parole.

2. Procédé selon la revendication 1,
**caractérisé en ce que**
les données vocales modulées de façon linéaire par impulsions et codage sont guidées au moyen d'un dispositif de déviation (11) d'une sortie du dispositif de décodage (6a, 6b) directement vers l'entrée du dispositif de codage (6b, 6a).

3. Procédé selon la revendication 1 ou 2,
**caractérisé en ce que**
les codeurs-décodeurs de parole à la base des modes codeur-décodeur de parole comprennent des Adaptative-Multi-Rate-codecs, des codeurs-décodeurs pour la compression de données vocales, des codeurs-décodeurs pour la modulation différentielle adaptative par impulsions et codage et des codeurs-décodeurs pour l'amélioration du taux de transmission et de la qualité de transmission.

4. Procédé selon l'une quelconque des revendications précédentes,
**caractérisé en ce que**
le dispositif de déviation (11) est réalisé au moyen d'un logiciel dans un processeur de signal numérique, un Field Programmable Gate Array (FPGA), un Application Specific Integrated Circuit (ASIC) ou un processeur de réseau.

5. Procédé selon l'une quelconque des revendications précédentes,
**caractérisé en ce que**
les données vocales modulées de façon linéaire par impulsions et codage comprennent des mots avec un contenu d'information de 13 bits.

6. Procédé selon l'une quelconque des revendications précédentes,
**caractérisé en ce que**
les données vocales transmises dans le mode codeur-décodeur de parole sont transmises à l'intérieur d'une trame de parole à partir d'un réseau radio UTRAN ou vers un tel réseau.

7. Dispositif pour la conversion de données vocales transmises dans un premier mode codeur-décodeur de parole en données vocales transmises dans un second mode codeur-décodeur de parole à l'intérieur d'un centre de commutation d'un réseau de communication basé sur le standard UMTS ou standard GERAN selon un procédé conforme aux revendications précédentes,
**caractérisé par**
un dispositif de déviation (11) pour la déviation directe de données vocales modulées de façon linéaire par impulsions et codage, qui sont issues d'un décodage des données vocales transmises dans le premier mode codeur-décodeur de parole, de la sortie d'un dispositif de décodage (6a, 6b) à l'entrée d'un dispositif de codage (6b, 6a) pour le codage des données vocales modulées de façon linéaire par impulsions et codage en données vocales à transmettre dans le second mode codeur-décodeur de parole.

8. Dispositif selon la revendication 7,
**caractérisé par**
un dispositif de commutation (12-15, 18-21) disposé dans le dispositif de déviation (11) pour l'activation et/ou la désactivation du dispositif de déviation (11).

9. Dispositif selon la revendication 7 ou 8,
**caractérisé en ce que**
le dispositif de déviation (11) est disposé dans un processeur de signal numérique, un Field Programmable Gate Array (FPGA), un Application Specific Integrated Circuit (ASIC) ou un processeur de réseau.

10. Dispositif selon l'une quelconque des revendications 7 à 9,
**caractérisé en ce que**
les dispositifs de décodage et de codage (6a, 6b) sont conçus de telle sorte qu'ils décodent resp. codent les données vocales à partir d'un mode codeur-décodeur de parole ou dans un tel mode sur la base d'un Adaptive-Multi-Rate-codec, d'un codeur-décodeur pour la compression de données vocales, d'un codeur-décodeur pour la modulation différentielle adaptative par impulsions et codage et/ou d'un codeur-décodeur pour l'amélioration du débit de transmission et de la qualité de transmission.
